Europäisches Patentamt

(19) European Patent Office

Office européen des brevets

(11) Publication number: **0 119 651**
**B1**

(12) **EUROPEAN PATENT SPECIFICATION**

(45) Date of publication of patent specification: **05.07.89**

(21) Application number: **84200341.0**

(22) Date of filing: **07.03.84**

(51) Int. Cl.⁴: **F 02 G 5/02, F 22 B 1/18**

(54) **Device for the dosed absorption of heat from exhaust gases.**

(30) Priority: **09.03.83 NL 8300850**

(43) Date of publication of application:
**26.09.84 Bulletin 84/39**

(45) Publication of the grant of the patent:
**05.07.89 Bulletin 89/27**

(84) Designated Contracting States:
**AT BE CH DE FR GB IT LI LU NL SE**

(56) References cited:
**DE-A-2 804 895**
**DE-A-3 032 090**
**DE-C- 421 677**
**DE-C- 467 029**
**GB-A- 624 722**
**US-A-1 630 546**
**US-A-2 438 719**

(73) Proprietor: **B.V. v/H. Gebr. de Haan**
**Industrieweg 27**
**NL-9601 LP Hoogezand (NL)**

(72) Inventor: **van der Zande, Christoffel Adrianus**
**7 Dr. Aletta Jacobsstraat**
**NL-9611 EA Sappemeer (NL)**

(74) Representative: **Timmers, Cornelis Herman**
**Johannes et al**
**EXTERPATENT P.O. Box 90649**
**NL-2509 LP 's-Gravenhage (NL)**

# Description

The invention relates to a device for delivering a hot, first medium for utility and/or heating purposes, particularly aboard of a vessel, comprising a heat exchanger connected to an exhaust conduit and a control valve controlling the flow of a second, heat exchanging medium to said heat exchanger.

Such a device is known from GB—A—624.722. In this known device the heat exchanger consists of a boiler which for its proper operation depends upon the presence of a certain amount of the medium to be heated, in this case water which is converted into steam. Only when there is no demand for steam the boiler is allowed to run dry.

There are thus long periods in which the boiler is at least partly filled with water which means that there are always parts in the exhaust gas conduit which are considerably cooler than the hot exhaust gases. This results in sulphur condensation which causes serious damage to, and even leakage of, the heat exchanger.

The aim of the invention is to provide a device of the above mentioned kind which obviates this drawback and this aim is achieved by the measures as described in the characterising clause of the claim.

The evaporator is never filled with the second medium and consequently runs at a much higher temperature than the boiler used according to GB—A—624.722. Consequently there is no corrosion, less maintenance, a much longer lifetime and a cheaper structure. Another advantage is that the pressure in the system consisting of evaporator and condenser is lower than the pressure in the known system so that there is less risk of leakage and the parts are not highly stressed.

When heat is required, appropriate control means will open said valve to a greater or lesser extent, which is practically immediately followed by the production of vapor which is condensed in the condenser; the condensation heat then being released heats the medium flowing through the condenser.

When the valve is closed, all liquid present in the evaporator will evaporate and be subsequently condensed in the condenser, whereupon all liquid present in the installation will be present between the condenser and the control valve.

Thus, when no heat is being absorbed, the evaporator will acquire the temperature of the exhaust gases so that no condensate will be formed on the exhaust gas side. By then dosing——also during full capacity—the supplied liquid and by distributing same effectively over the heating surface, condensation can be prevented completely, obtaining the advantage of a simple construction at the exhaust gas side.

As the system operates in a fully closed circuit the maximum temperature of the heat delivered at the condenser is determined by the specific characteristics of the liquid and the pressure in the circuit.

It is observed that DE—A—3.032.090 discloses a device for heating the oil in the sump of an internal combustion engine by means of a condenser, supplied with vapor generated in an evaporator placed in the exhaust conduit of said engine. The condensate is returned by capillary action through a number of conduits of very small diameter to the evaporator, the operation of the device being controlled by a control valve in the vapor supply conduit. Such a set-up is unsuitable for delivering a hot medium, particularly hot water for utility purposes aboard of a vessel because of the small capacity of the condensate return circuit while furthermore the control by means of a control valve in the vapor discharge conduit in an installation with a capacity such as required aboard of a vessel would result into a complicated and costly structure.

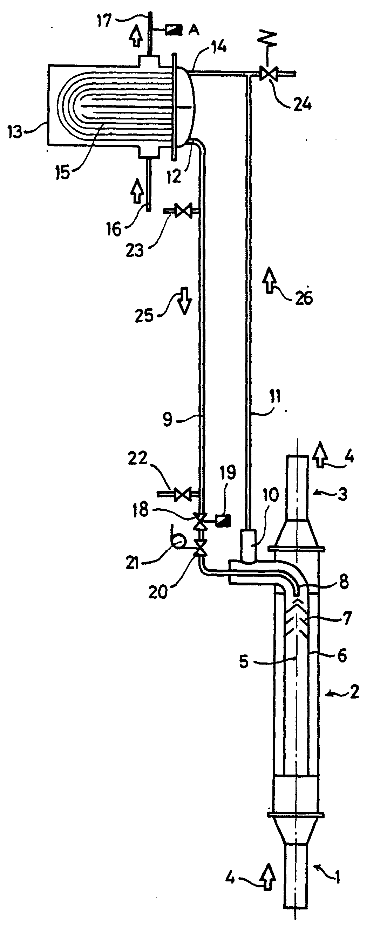

The invention is elucidated with reference to the drawing which diagrammatically shows an embodiment according to the invention.

In the figure, the reference numeral 1 denotes the exhaust pipe of a ship's diesel engine, not shown here, which changes into a widened portion 2 which joins the exhaust pipe portion 3 having a regular cross section. The direction of the exhaust gases is indicated by the arrows 4.

The widened portion 2 contains an evaporator 5 consisting of a cylindrical casing 6 provided with external fins (not shown) and filled with several superposed evaporator plates 7. These are arranged and provided with openings in such a way that the liquid (second medium) supplied via the opening 8 located thereabove flows evenly along the entire surface of evaporation. The opening 8 forms the end of a conduit 9 placed in the vapor conduit at a point where the exhaust gases pass, so as to prevent condensate from being formed in this conduit.

Apart from the conduit 9 which, as will be still further described, supplies liquid, at point 10 the end of a conduit 11 terminates into the evaporator and this conduit serves to discharge the vapor formed. The conduit 9 ends, at point 12, in a condenser 13 into which, at point 14, terminates the vapor conduit 11. The condenser 13 is not shown in detail, and may be, for example, of a construction known per se having a set of tubes 15 connected between the points 12 and 14. The supply pipe 16 and the discharge pipe 17 of the medium to be heated (first medium), in this case being hot water for a vessel, are connected to the condenser.

The condensate conduit 9 contains an ON-OFF valve 18 with an exhaust-gas thermostat 19 which puts the apparatus out of operation when there is no or insufficient heat in the exhaust gases. There is further the control valve 20 with the associated sensor 21 controlling the valve 20 as a function of the heat requirement, as well as two valves, 22 and 23, which are provided, respectively, for filling and for dosing of the quantity of liquid (second medium) in the system. The pressure-relief valve 24 is connected to the vapor conduit 11.

The device operates as follows:

According to the need for hot water in the circuit 16—17, the valve 20 is more or less opened. When the valve 20 is in the open position, the condensate passes in the direction of the arrow 25 towards the evaporator 5, flows via the opening 8 upon the evaporator plates 7 and is quickly converted into vapor which flows through the conduit 11, in the direction indicated by the arrow 26, to the condenser 13. The vapor is condensed herein. The condensation heat being released heats the water flowing in the circuit 16—17. Opening the valve 20 more or less by means of a control means 21 not further specified, makes it possible to control the water temperature quickly and accurately. When the desired temperature is reached the valve 20 closes, and all the liquid present past the valve 20 will evaporate in the evaporator, which is 'heated dry', is subsequently condensed in the condenser and stored in the condensate conduit 9 before the valve 20 so as to be ready for immediate use.

## Claim

A device for delivering a hot, first medium for utility and/or heating purposes, particularly aboard of a vessel, comprising a heat exchanger (2) connected to an exhaust conduit (1) and a control valve (20) controlling the flow of a second, heat exchanging medium to said heat exchanger, characterized in that said heat exchanger (2) consists of an evaporator (5) placed within an exhaust conduit (1) and having a cylindrical, vertical casing (6) closed on the underside and provided with cooling fins on the exhaust gas side, and with internal evaporator plates (7) fixed in heat-conducting contact to the outer wall of the casing (6), the upper part of said casing (6) terminating into a part perpendicular to the evaporator axis which goes through the exhaust conduit wall and to which is connected a vapor discharge riser conduit (11), connected to a condenser (13) through which the first medium to be heated flows and which is placed at a level higher than the level of said evaporator while said condenser (11) is further connected to a condensate return conduit (9) which incorporates the control valve, being a one-way regulating valve (20) and through which the condensate is supplied by gravity action to the evaporator (5) via a conduit part (8) which enters the evaporator via said terminal part, is positioned in the vapor discharge conduit (11) in such a way that there is at no point direct contact between the exhaust gases and the condensate conduit (8), and ends above the evaporator plates.

## Patentanspruch

Anlage zur Abgabe eines ersten heissen Mediums zum Zwecke der Nutzung und/oder Heizung, insbesondere an Bord eines Schiffes, bestehend aus einem mit einer Abgasleitung (1) verbundenen Wärmetauscher (2) und aus einem Steuerventil (20), das die Strömung eines zweiten wärmetauschenden Mediums zum Wärmetauscher steuert, dadurch gekennzeichnet, dass der Wärmetauscher (2) aus einem Verdampfer (5) besteht, der im Inneren der Abgasleitung (1) angeordnet; ist und ein vertikales, zylinderförmiges Gehäuse (6) hat, welches an der Unterseite geschlossen und mit Kühllamellen auf der Abgasseite sowie mit innenliegenden Verdampferplatten (7) versehen ist, die wärmeleitend an der Aussenwand des Gehäuses (6) befestigt sind, wobei der obere Teil des Gehäuses (6) in einem rechtwinklig zur Achse des Verdampfers angeordneten Teil endet, das die Wand der Abgasleitung durchbricht und mit einer Dampfentnahmesteigleitung (11) verbunden ist, die mit einem Kondensator (13) verbunden ist, durch welchen das zu erhitzende erste Medium strömt und welcher sich auf einem höheren Niveau befindet als der Verdampfer; der Kondensator (13) ist ferner mit einer Kondensatrücklaufleitung (9) verbunden, in welcher ein steuerbares als Einweg-Regulierventil ausgebildetes Ventil (20) angeordnet ist und durch welche das Kondensat im freien Umlauf über einen Leitungsabschnitt (Kondensatleitung 8) dem Verdampfer (5) zugeführt wird, wobei dieser Leitungsabschnitt (8) durch das Teil, in welchem der obere Teil des Gehäuses (6) endet, hindurch in den Verdampfer hineinführt, in der Dampfentnahmesteigleitung (11) derart positioniert ist, dass zwischen der Kondensatleitung (8) und den Abgasen an keinem Punkt ein direkter Kontakt besteht, und oberhalb der Verdampferplatten (7) endet.

## Revendication

Dispositif pour la fourniture d'un premier fluide chaud à des fins utiles et/ou de chauffage, particulièrement à bord d'un véhicule, comprenant un échangeur de chaleur (2) connecté à un pot d'échappement (1) et une vanne de contrôle (20) contrôlant le flux d'un second fluide caloporteur vers ledit échangeur de chaleur, caractérisé en ce que ledit échangeur de chaleur (2) se compose d'un évaporateur (5) placé dans un conduit d'échappement (1) et ayant un logement vertical cylindrique (6) fermé du côte inférieur et doté d'ailettes de refroidissement du côté de l'échappement du gaz, et de lames internes d'évaporation (7) fixées par contact conducteur de chaleur à la paroi extérieure du logement (6), la partie supérieure du logement (6) se terminant par une portion perpendiculaire à l'axe de l'évaporateur qui traverse la paroi du conduit d'échappement et à laquelle est connecté un conduit ascendant de décharge de la vapeur (11), connecté à un condenseur (13) dans lequel circule le premier fluide à être chauffé et qui est placé à un niveau supérieur à celui dudit évaporateur tandis que ledit condenseur (13) est connecté en outre à un conduit de retour de condensat (9) qui incorpore la vanne de contrôle, celle-ci étant une vanne de régulation mono-voie (20) et par laquelle la condensat est fourni par gravité à l'évaporateur (5) via une portion de conduit (8) qui rentre dans l'évaporateur par ladite portion terminale, est positionnée dans le conduit (11) de décharge de la vapeur de telle manière qu'il n'y ait nulle part un contact direct entre les gaz d'échappement et le conduit de condensat (8) et se termine au dessus des lames de l'évaporateur.